# EUROPÄISCHE PATENTANMELDUNG

(11) **EP 1 083 086 A2**
(43) Veröffentlichungstag der Anmeldung: **14.03.2001**
(21) Anmeldenummer: 00119073.5
(22) Anmeldetag: 02.09.2000
(51) Int. Cl.: B60Q 1/04

(54) **Fahrzeugscheinwerfer mit Halter**

(30) Priorität: 08.09.1999 DE 19942865
(71) Anmelder: Hella KG Hueck & Co., 59552 Lippstadt (DE)
(72) Erfinder: Smarslik, Christian, 59555 Lippstadt (DE); Geesmeier, Andreas, 33089 Paderborn (DE); Damasky, Joachim, Dr., 33449 Langenberg (DE); Körsten, Michael, 59555 Lippstadt (DE); Schäfers, Hans-Reiner, 33106 Paderborn (DE)

(57) **Zusammenfassung**

Der Scheinwerfer hat ein Gehäuse (1), in welchem sich in Tiefenrichtung hinter einer Abstrahlfläche (3) ein von einem Reflektor (2) umgebenes Leuchtmittel befindet, das mittels eines Lampenhalters (6) in einer Gehäuseöffnung (8) fixiert ist. An dem Scheinwerfergehäuse ist ein Scheinwerferhalter (12) befestigt. Um bei Verwendung eines Leuchtmittels in Gestalt einer Gasentladungslampe (4) eine kompakte Bauweise zu ermöglichen, ist die Gasentladungslampe (4) mit ihrem Brenner (5) horizontal in Breitenrichtung der Abstrahlfläche (3) liegend angeordnet. Hierzu befindet sich die Gehäuseöffnung (8) in Breitenrichtung seitlich am Gehäuse (1) und hat der Scheinwerferhalter (12) eine Lageröffnung (6), in der in mit dieser koaxialen Lage der Gasentladungslampe (4) das Gehäuse (1) aufgenommen ist.

## Beschreibung

Die Erfindung bezieht sich auf einen Fahrzeugscheinwerfer der im Gattungsbegriff des Patentanspruchs 1 näher bezeichneten Art.

Solche Fahrzeugscheinwerfer sind insbesondere als Zusatzscheinwerfer zum äußeren Anbau am Fahrzeug hinreichend bekannt, wobei diese Scheinwerfer mit herkömmlichen Leuchtmitteln, wie Halogenlampen, ausgestattet sind. Lampen dieser Art können sowohl horizontal liegend als auch aufrecht stehend in dem Scheinwerfer angeordnet werden, was von der Gestaltung des Scheinwerfergehäuses und dem zu beanspruchenden Platz abhängt.

Zum anderen sind Fahrzeugscheinwerfer mit Gasentladungslampen bekannt, die eine horizontale Einbaulage erfordern. Der Brenner der Gasentladungslampe hat aufgrund der für die Gasentladungsstrecke benötigten Länge eine erhebliche Länge, zu der noch die Länge des damit koaxialen Lampensockels hinzukommt. Bei der üblichen Einbaulage der Gasentladungslampe in Tiefenrichtung des Scheinwerfers ergibt sich eine große äußere Bautiefe des gesamten Scheinwerfers, die sich oft außen an Fahrzeugen nicht unterbringen läßt.

Der Erfindung liegt die Aufgabe zugrunde, einen Fahrzeugscheinwerfer der gattungsgemäßen Art zu schaffen, der eine kompakte Bauweise ermöglicht.

Diese Aufgabe wird bei einem Fahrzeugscheinwerfer der gattungsbildenden Art durch die kennzeichnenden Merkmale des Patentanspruchs 1 gelöst.

Für die Erfindung ist der horizontale Quereinbau der Gasentladungslampe im Scheinwerfergehäuse wesentlich. Hierauf ist die Ausbildung des Scheinwerferhalters mit seiner Lageröffnung abgestimmt, durch die hindurch die elektrische Versorgung der Gasentladungslampe vorgenommen werden kann. In der Lageröffnung des Scheinwerferhalters kann das Scheinwerfergehäuse leicht verschwenkt werden, um in Anbaulage dem Scheinwerfer die richtige Position zu geben. Trotz Verwendung einer Gasentladungslampe hat der Scheinwerfer eine geringe Gehäusetiefe, ohne daß an der Lichtleistung Abstriche gemacht werden müssen. Entsprechend kann die Bauform des Reflektors im Gehäuse leicht an die liegende Queranordnung der Gasentladungslampe angepaßt werden.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine perspektivische Vorderansicht eines Fahrzeugscheinwerfers mit einer Gasentladungslampe einschließlich Scheinwerferhalter,
- Fig. 2: eine perspektivische Vorderansicht des Gehäuses des Fahrzeugscheinwerfers nach Fig. 1
- Fig. 3: eine perspektivische Ansicht des zugehörigen Lampenhalters,
- Fig. 4: eine perspektivische Ansicht eines vorderen Anteils des Scheinwerferhalters
- Fig. 5: eine perspektivische Rückansicht des Reflektors des Fahrzeugscheinwerfers nach den Figuren 1 und 2,
- Fig. 6: einen Horizontalschnitt durch den kompletten Fahrzeugscheinwerfer gemäß Fig. 1,
- Fig. 7: eine vergrößerte Darstellung der Einzelheit A in Fig. 4 und
- Fig. 8: eine Seitansicht des Fahrzeugscheinwerfers nach Fig. 1.

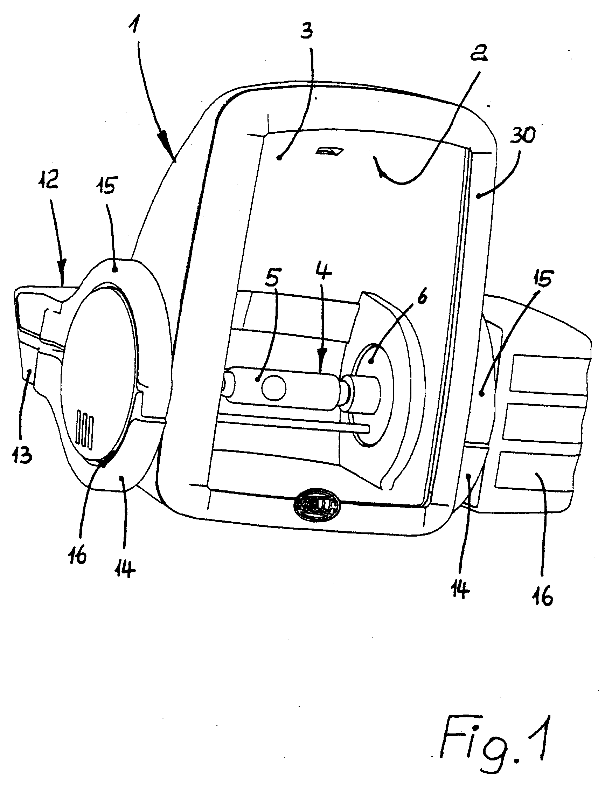

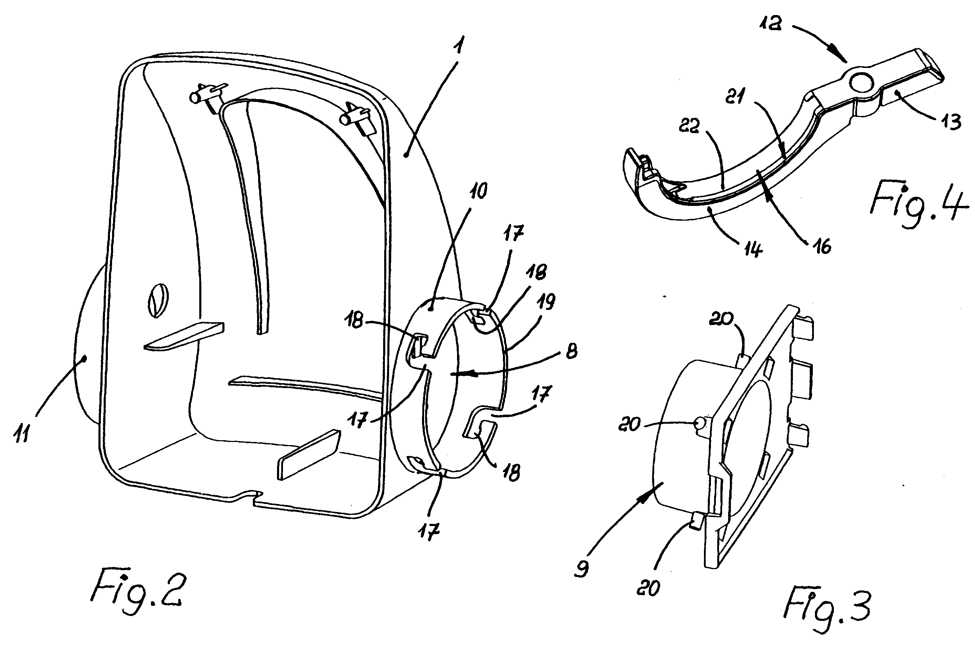

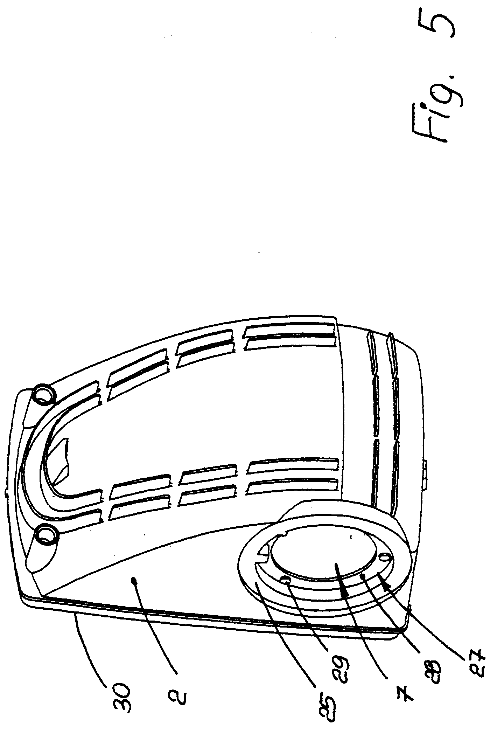

In Fig. 1 erkennt man ein Scheinwerfer-Gehäuse 1 in welchem ein Reflektor 2 aufgenommen ist, der in Fig. 3 für sich alleine dargestellt ist. Das Gehäuse 1 und ebenso der Reflektor 2 sind an den Vorderseiten offen und bilden hier eine Abstrahlfläche 3, die von einer in einem Glashalterahmen 30 fixierten Abschlußscheibe 3 verschlossen ist. Der Reflektor 2 umgibt den Brenner 5 einer Gasentladungslampe 4, von der in Fig. 1 das brennerseitige Ende des Lampensockels 6 wiedergegeben ist. Der Brenner 5 und der Lampensockel 6 sind miteinander koaxial, und der Lampensockel 6 tritt durch eine in Fig. 5 besser erkennbare Lampendurchtrittsöffnung 7 hindurch.

Die Lampendurchtrittsöffnung 7 des Reflektors 2 fluchtet mit einer Gehäuseöffnung 8, die in Fig. 2 dargestellt ist. In die Gehäuseöffnung 8 ist ein den Lampensockel 6 aufnehmender Lampenhalter 9 koaxial eingesetzt, der in Fig. 3 in seiner Gesamtheit sowie in seiner Einbaulage in Fig. 4 dargestellt ist. Die Sicherung des eingebauten Lampenhalters 9 erfolgt am Gehäuse 1, an dessen Außenseite ein Tubus 10 vorsteht, der mit der Gehäuseöffnung 8 koaxial ist. Der Tubus 10 ist hohlzylindrisch ausgebildet und mit seinem Innendurchmesser an den Außendurchmesser des hülsenförmigen Aufnahmeteils des Lampenhalters 9 angepaßt.

Zwischen dem Lampenhalter 9 und dem Tubus 10 des Gehäuses 1 besteht eine Bajonettverbindung, auf die nachstehend noch näher eingegangen werden wird.

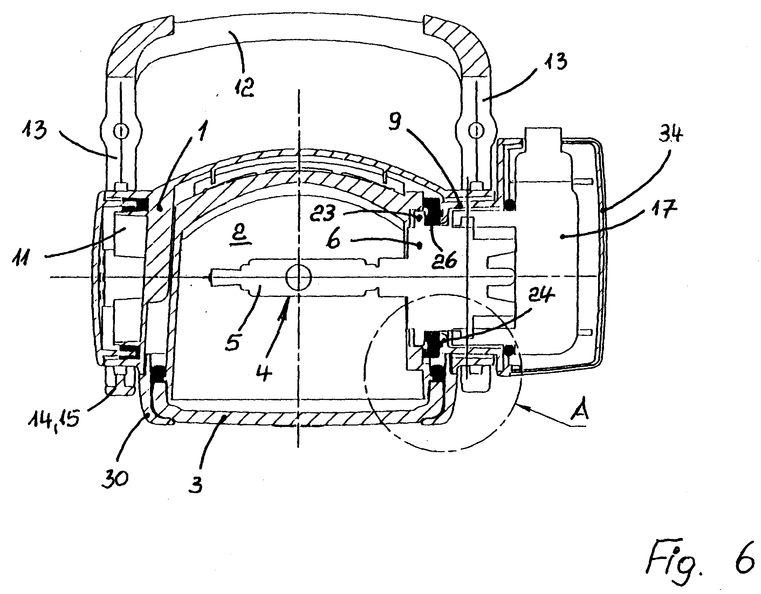

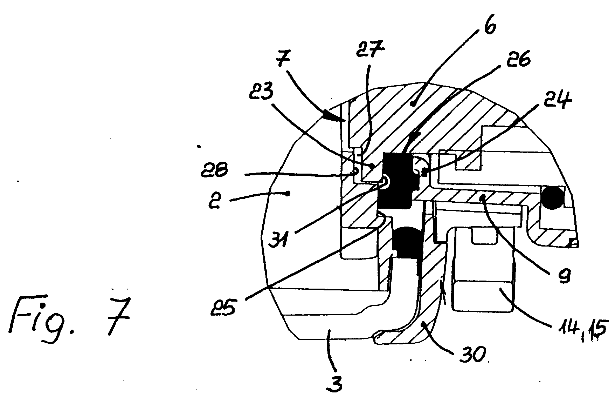

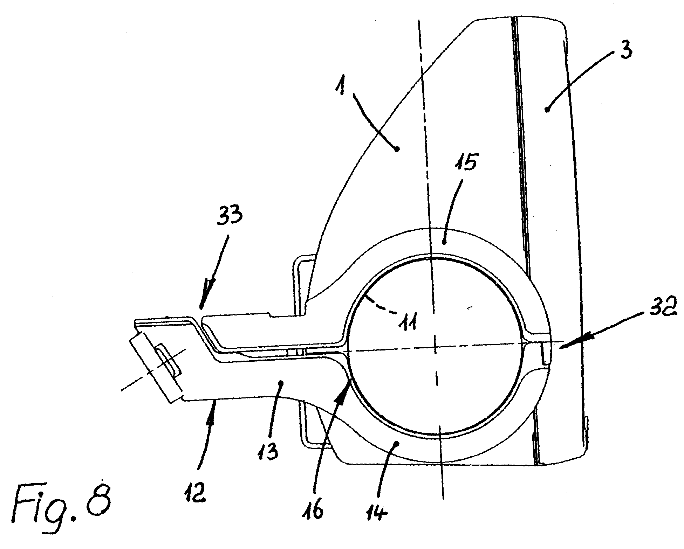

Koaxial mit dem ersten Tubus 10 an der einen Seite des Gehäuses 1 ist ein zweiter Tubus 11 an der gegenüberliegenden Gehäuseseite vorhanden, und beide Tubusse 10 und 11 dienen zur schwenkbaren Aufnahme des Gehäuses 1 an einem Scheinwerferhalter 12, den man in den Figuren 1 und 6 besonders erkennt. Der Scheinwerferhalter 12 besteht aus einem Bügel mit gabelartig vorgebogenen Enden, die jeweils einen Arm 13 mit einer endseitigen, unteren Lagerschale 14 bilden. Dies geht insbesondere aus Fig. 8 hervor, aus der ersichtlich ist, daß auf die Lagerschale 14 eine obere Lagerschelle 15 aufsetzbar ist, die am Vorderende über eine lösbare Gelenkverbindung 32 und am Hinterende über eine Schraubverbindung 33 an der Lagerschale 14 bzw. am zugehörigen Arm 13 des Scheinwerferhalters 12 festlegbar ist. Die untere Lagerschale 14 und die obere Lagerschelle 15 umschließen eine hohlzylindrische Lageröffnung 16, die durch Anziehen der Schraubverbindung 33 nach Art einer Schelle verengt werden kann. Das Gehäuse 1 ist mit seinen beidseitigen Tubussen 10 und 11 in den Lageröffnungen 16 der Arme 13 des Scheinwerferhalters 12 aufgenommen, wobei bei gelösten Schraubverbindungen 33 der oberen Halterschelle 15 das Gehäuse 1 um die Achse der Tubusse 10 und 11 geschwenkt werden kann und nach dem Anziehen der Schraubverbindungen 33 durch Reibschluß zwischen den Tubussen und der Lagerschale 14 sowie der Lagerschelle 15 schwenksicher gehalten ist.

Die vorerwähnte Bajonettverbindung zwischen dem hülsenfömigen Aufnahmeteil des Lampenhalters 9 und dem die Gehäuseöffnung 8 umgebenden Tubus 10 am Gehäuse 1 geht im einzelnen aus deb Figuren 2 und 3 hervor. Der Tubus 10 weist zu seinem freien Rand 19 hin in axialer Richtung offene Bajonettschlitze 17 auf, die nach innen zum Gehäuse 1 hin in in Umfangsrichtung des Tubus 10 verlaufende Abschnitte 18 übergehen. Daran angepaßt hat der Lampenhalter 9 an seiner Außenseite radial vorstehende Bajonettzapfen 20, mit denen der Lampenhalter 9 in Axialrichtung in den Tubus 10 des Gehäuses 1 eingeführt und anschließend nach Drehen in Umfangsrichtung am Gehäuse 1 fixiert werden kann.

Eine Besonderheit der Bajonettzapfen 20 am Lampenhalter 9 liegt darin, daß sie länger sind als die Wandung des Tubus 10 am Gehäuse 1 dick ist. Dadurch stehen in Einbaulage des Lampenhalters 9 die Bajonettzapfen 20 außenseitig über den Umfang des Tubus 10 vor, was eine formschlüssige Verriegelung des angebauten Lampenhalters 9 am Gehäuse 1 gegen ein Abziehen in axialer Richtung ermöglicht. Hierfür weisen die Lagerschale 14 des Scheinwerferhalters 12 und/oder die zugehörige Halterschelle 15 an ihren Innenwandungen 21 eine Rillung auf, durch die zumindest eine Nut 22 oder ein Absatz gebildet ist, wie in Fig. 4 dargestellt, worin bzw. wohinter in der Einbaulage die Bajonettzapfen 20 außen am Lampenhalter 9 eingreifen.

Fig. 6 veranschaulicht, daß an den Lampensockel 6 durch das rückwärtige offene Ende des Lampenhalters 9 hindurch ein Stecker 17 zur elektrischen Versorgung der Gasentladungslampe 4 angesetzt werden ist. Durch eine auf den Lampenhalter 9 aufgesetzte Haube 34 ist der Stecker 17 nach außen hin abgedeckt.

Weiter machen die Figuren 6 und 7 deutlich, daß mittels der Bajonettverbindung zwischen dem Lampenhalter 9 und dem Gehäuse 1 ein dichter Abschluß zwischen dem Lampensockel 6 und dem mit Ausnahme der Lampendurchtrittsöffnung 7 rundum geschlossenen Reflektor 2 erzielt werden kann. Am Lampensockel 6 ist nahe dessen Innenende ein radial nach außen vorstehender Sockelteller 23 angeordnet, der in Einbaulage in einen in Fig. 5 erkennbaren, die Lampendurchtrittsöffnung 7 umgebenden Falz 27 eintaucht, an dessen Grund 28 für die Anlage der brennerseitigen Stirnfläche des Sockeltellers 23 Anlagenocken 29 vorgesehen sind.

An den Falz 27 schließt in radialer Richtung eine Flanschfläche 25 außen am Reflektor 2 an, die konzentrisch mit der Lampendurchtrittsöffnung 7 ist. Der Lampenhalter 9 hat an seinem Innenende einen radial nach innen vorstehenden Flansch 24, der mit entsprechender radialer Breite in seiner Einbaulage der Flanschfläche 25 am Reflektor 2 einerseits und der äußeren ringförmigen Stirnseite 31 am Sockelteller 23 des Lampensockels 6 gegenüberliegt, also sowohl die Flanschfläche 25 als auch die Stirnseite 31 überlappen. Diese äußere Stirnseite 31 des Sockeltellers 23 und die Flanschfläche 25 am Reflektor 2 liegen in einer gemeinsamen Ebene oder sind geringfügig zueinander parallel versetzt. Zwischen dem Flansch 24 am Lampenhalter 9 einerseits und der äußeren Stirnseite 31 des Sockeltellers 23 sowie der Flanschfläche 25 am Reflektor 2 andererseits ist eine elastische Ringdichtung 26 verspannt, welche die Fuge zwischen dem Sockelteller 23 und dem Falz 28 an der Lampendurchtrittsöffnung des Reflektors 2 abdeckt und nach außen hin dicht verschließt. Die Verspannung der Ringdichtung 26 erfolgt durch die Bajonettkupplung des Lampenhalters 9 am Tubus 10 des Gehäuses 1. Der Kraftschluß erfolgt hierbei über den Reflektor 2, der sich mit seiner von der Lampendurchtrittsöffnung 7 abliegenden Seite an der Innenseite des Gehäuses 1 abstützt.

## Patentansprüche

1. Fahrzeugscheinwerfer mit einem Gehäuse (1), in welchem sich in Tiefenrichtung hinter einer Abstrahlfläche (3) ein von einem Reflektor (2) umgebenes Leuchtmittel befindet, das mittels eines Lampenhalters (6) in einer Gehäuseöffnung (8) fixiert ist, und an welchem ein Scheinwerferhalter (12) befestigt ist,
dadurch gekennzeichnet,
daß das Leuchtmittel eine Gasentladungslampe (4) ist, die mit ihrem Brenner (5) horizontal in Breitenrichtung der Abstrahlfläche (3) liegend angeordnet ist, daß sich die Gehäuseöffnung (8) in Breitenrichtung seitlich am Gehäuse (1) befindet und daß der Scheinwerferhalter (12) eine Lageröffnung (16) hat, in der in mit dieser koaxialen Lage der Gasentladungslampe (4) das Gehäuse (1) aufgenommen ist.

2. Fahrzeugscheinwerfer nach Anspruch 1,
dadurch gekennzeichnet,
daß das Gehäuse (1) einen außen vorstehenden, die Gehäuseöffnung (8) kragenförmig umschließenden Tubus (10) hat, der in der Lageröffnung (16) des Scheinwerferhalters (12) koaxial aufgenommen ist.

3. Fahrzeugscheinwerfer nach Anspruch 2,
dadurch gekennzeichnet,
daß der Scheinwerferhalter (12) im Bereich seiner Lageröffnung (16) nach Art einer Schelle ausgebildet ist, in welcher der Tubus (10) am Gehäuse (1) reibschlüssig fixiert ist.

4. Fahrzeugscheinwerfer nach Anspruch 3,
dadurch gekennzeichnet,
daß der Scheinwerferhalter (12) eine feste, die untere Begrenzung der Lageröffnung (16) bildende Lagerschale (14) hat, mit der eine lösbare, die Lageröffnung (16) oberseitig umschließende Halterschelle (15) verschraubt ist.

5. Fahrzeugscheinwerfer nach einem der Ansprüche 2 bis 4,
dadurch gekennzeichnet,
daß das Gehäuse (1) an der in Breitenrichtung der Gehäuseöffnung (8) gegenüberliegenden Seite einen zweiten nach außen vorstehenden Tubus (11) hat, der mit dem ersten Tubus (10) an der Gehäuseöffnung (8) koaxial ist, und daß der Scheinwerferhalter (12) entsprechend zweiarmig ist und an beiden Armen (13) je eine Lageröffnung (16) hat, die miteinander koaxial sind.

6. Fahrzeugscheinwerfer nach Anspruch 5,
dadurch gekennzeichnet,
daß der Scheinwerferhalter (6) ein Bügel ist, dessen beide Enden die Arme (8) bilden.

7. Fahrzeugscheinwerfer nach einem der Ansprüche 2 bis 6,
dadurch gekennzeichnet,
daß der Gehäuse-Tubus (10) an der Gehäuseöffnung (8) zu seinem freien Rand (19) hin offene Bajonettschlitze (17) und der Lampenhalter (9) entsprechende, an seinem Umfang vorstehende Bajonettzapfen (20) hat.

8. Fahrzeugscheinwerfer nach Anspruch 7,
dadurch gekennzeichnet,
daß die Bajonettzapfen (20) am Lampenhalter (9) eine Länge haben, die größer als die Wanddicke des Gehäuse-Tubus (10) ist, und der Scheinwerferhalter (12) an der seine Lageröffnung (16) begrenzenden Innenwandung (21) der Lagerschale (14) und/oder der Halterschelle (15) eine Nut (22) oder einen Absatz hat, hinter dem die über den Tubus (10) hinaus überstehenden Bajonettzapfen (20) des Lampenhalters (9) zwecks dessen axialer Sicherung gegen ein Abziehen nach außen vom Gehäuse (1) weg greifen.

9. Fahrzeugscheinwerfer nach Anspruch 7 oder 8,
dadurch gekennzeichnet,
daß die Gasentladungslampe (4) einen im Lampenhalter (9) aufgenommenen Sockel (6) mit einem radial nach außen vorstehenden Sockelteller (23) und der Lampenhalter (9) an seinem Innenende einen radialen, den Sockelteller (23) überlappenden Flansch (24) hat, über den der Sockelteller (23) gegen Auflagenocken (29) am Rand einer Lampendurchtrittsöffnung (7) im Reflektor (2) verspannt ist.

10. Fahrzeugscheinwerfer nach Anspruch 9,
dadurch gekennzeichnet,
daß eine Flanschfläche (25) konzentrisch zur Lampendurchtrittsöffnung (7) an der Außenseite des Reflektors (2) ausgebildet ist, die den Sockelteller (23) der Gasentladungslampe (4) umgibt und daß zwischen dieser Flanschfläche (25) und dem Sockelteller (23) der Gasentladungslampe (4) einerseits sowie dem Flansch (24) am Lampenhalter (9) andererseits eine elastische Ringdichtung (26) verspannt ist.

11. Fahrzeugscheinwerfer nach Anspruch 10,
dadurch gekennzeichnet,
daß die Flanschfläche (25) am Reflektor (2) zur Lampendurchtrittsöffnung (7) hin gestuft ist und in einen an der Lampendurchtrittsöffnung (7) liegenden Falz (27) übergeht, in welchen der Sockelteller (23) eingesenkt ist, und daß die vom Brenner (5) der Gasentladungslampe (4) abgewandte Stirnseite (31) des Sockeltellers (23) in einer mit der Flanschfläche (25) gemeinsamen oder in einer hierzu zumindest naheliegenden, parallelen Ebene angeordnet ist.

12. Fahrzeugscheinwerfer nach Anspruch 11,
dadurch gekennzeichnet,
daß am Grund (28) des Falzes (27) am Reflektor (2) die Auflagenocken (29) für den Sockelteller (23) der Gasentladungslampe (4) angeordnet sind.
